# EUROPÄISCHE PATENTSCHRIFT

(11) **EP 1 486 741 B1**
(45) Veröffentlichungstag und Bekanntmachung des Hinweises auf die Patenterteilung: **29.11.2006**
(21) Anmeldenummer: 03013522.2
(22) Anmeldetag: 13.06.2003
(51) Int. Cl.: F24J 3/08

(54) **Energiepfahl**
Energy pile
Pieu pour énergie

(43) Veröffentlichungstag der Anmeldung: 15.12.2004
(73) Patentinhaber: Tiroler Röhren- und Metallwerke Aktiengesellschaft, A-6060 Hall (AT); Amann, Armin, Ing., 6824 Schlins (AT)
(72) Erfinder: Amann, Armin, Ing., 6824 Schlins (AT); Steinlechner, Erich, Ing., 6112 Wattens (AT); Maurer, Reinhold, Ing., 6020 Innsbruck (AT)
(74) Vertreter: Lindner, Michael

(56) Entgegenhaltungen:
- EP-A- 0 582 118
- WO-A-03/060389
- DE-A- 1 601 325
- DE-A- 4 329 269
- DE-U- 7 936 659
- DE-U- 9 414 813
- GB-A- 2 058 334
- US-A- 4 327 560

## Beschreibung

Die Erfindung betrifft eine Erdwärmesonde zur Aufnahme und/oder Abgabe von thermischer Energie bzw. zur Gewinnung von geothermischer Energie, mit zumindest einem rohrförmigen Element, einer Rammspitze, die an einem Ende des rohrförmigen Elements vorgesehen ist, und einem Leitungssystem, das in dem rohrförmigen Element verläuft und zur Führung eines thermischen Energie aufnehmenden und/oder abgebenden Mediums (Wärmeträgermedium) dient.

Eine Erdwärmesonde der vorgenannten Art ist beispielsweise aus der DE 37 19 523 A1 bekannt. Auch die Druckschrift DE-U-7936659 offenbart eine Erdwärmesonde, die aus stangenförmigen Elementen aufgebaut wird.

Die begrenzten Vorkommen an fossilen Energieträgern und die sich abzeichnenden Klimaveränderungen zwingen uns, über den ungebremsten Verbrauch dieser Energieträger, die auch wertvolle Rohstoffe sind, nachzudenken. Ressourcenschonung und Klimaschutz sind daher wichtige Ziele einer nachhaltigen Energiezukunft. Es ist auch erklärte Absicht der EU-Energiepolitik und damit ihrer Mitgliedsstaaten, die Energieversorgung Schritt für Schritt auf erneuerbare Energieträger abzustellen und umweltschonende Techniken im Bereich der Energieanwendung einzuführen.

Die Geothermie ist ein bisher wenig genutztes, dezentral verfügbares, derzeit weitgehend brachliegendes Energiepotential, das mittels Erdwärmesonden gehoben werden kann. Die im Erdreich vorhandene thermische Energie bietet eine ganzjährig gleichmäßige Verfügbarkeit und ermöglicht darüber hinaus den Energiefluss in zwei Richtungen: es kann dem Erdreich/dem Boden thermische Energie entnommen und/oder zugeführt werden. Die große Masse des Erdreichs ermöglicht zudem die Zwischenspeicherung als auch die saisonale Speicherung von Wärme.

Nach heutigem Stand der Bau- und Dämmtechnik gebaute Einfamilienhäuser, Doppel- und Reihenhäuser als auch die Wohneinheiten von Siedlungen weisen gegenüber früher einen sehr geringen Heizwärmebedarf auf. Die physikalisch und technisch vorgegebene, untere Leistungsgrenze von Heizkesseln mit Gas- oder Ölfeuerung liegt um den Faktor 2 bis 4 über dem Wärmebedarf obig angeführter Haus- und Wohnungstypen. Gas- und Ölfeuerungen arbeiten somit in den beschriebenen Haus- und Wohnungstypen immer im Teillastbereich - bei moderaten Außentemperaturen z.T. im extremen Teillastbereich - und folglich mit deutlich reduziertem Wirkungsgrad. Dies bedeutet aber auch einen unwirtschaftlichen und wenig umweltfreundlichen Betrieb der Heizkessel bei diesen Anwendungen.

Hingegen können Wärmepumpen für jeden Leistungsbereich gebaut werden. Damit ist es möglich, die Leistung des Heizgeräts dem tatsächlichen Heizwärmebedarf eines nach neuester Bau- und Dämmtechnik gebauten Objekts optimal anzupassen.

Erdwärmesonden ermöglichen in Verbindung mit Wärmepumpen die effiziente Nutzung von Wärme aus dem Erdinneren zur Gebäudebeheizung. Der heute übliche, hohe Nutzungsgrad von Wärmepumpen mit Erdwärmesonden gewährleistet auf der einen Seite einen sehr wirtschaftlichen Betrieb, auf der anderen Seite wird dadurch auch ein bedeutender Beitrag zur Energieeinsparung und damit zur Ressourcenschonung bzw. zum Klimaschutz geleistet.

Erdwärmesonden eignen sich auch für Kühlzwecke entweder direkt oder indirekt über Kühlaggregate.

Einer der Gründe, warum sich die Nutzung geothermischer Energie bisher nur wenig durchgesetzt hat, liegt an den relativ hohen Kosten für ein entsprechendes System. Insbesondere die Herstellung und die Verbauung von Erdwärmesonden ist teuer.

Die der Erfindung zu Grunde liegende Aufgabe besteht deshalb darin, eine Erdwärmesonde zu schaffen, die eine Nutzung von Umweltwärme in großem Umfang ermöglicht. Insbesondere soll eine Erdwärmesonde mit einem möglichst breiten Anwendungsspektrum bereitgestellt werden. weitere bei der Bereitstellung einer Erdwärmesonde zu berücksichtigende Punkte sind:
Modularer Aufbau mit baukastenähnlichen Komponenten, Verwendung von soliden bewährten Materialien, Montagefreundlichkeit - kurze Montagezeiten, gute Transportmöglichkeit der einzelnen Komponenten, geringer Platzbedarf für die Herstellung vor Ort, Anpassungsfähigkeit an die örtlichen Gegebenheiten, Anwendung bei Neuanlagen als auch bei bestehenden Objekten und Anlagen, und die jahrzehntelange Funktionstüchtigkeit, Wirtschaftlichkeit und Preiswürdigkeit.

Die der Erfindung zu Grunde liegende Aufgabe wird von einer Erdwärmesonde gelöst, die die Merkmale gemäß Anspruch 1 aufweist. Insbesondere wird die Aufgabe dadurch gelöst, dass das rohrförmige Element der Erdwärmesonde aus Metall ist, und dass das andere Ende des rohrförmigen Elements zur Aufnahme eines weiteren rohrförmigen Elements ausgebildet ist, wobei das rohrförmige Element in das Erdreich einrammbar ausgebildet ist. Innerhalb des rohrförmigen Elements ist ein gewelltes Auskleidungsrohr vorgesehen, welches durch ein gut wärmeleitendes Medium in gutem thermischen Kontakt mit dem rohrförmigen Element steht. Im Auskleidungsrohr verläuft das Leitungssystem.

Durch die Verwendung rohrförmiger Elemente, die an ihren Enden miteinander verbindbar sind, vorzugsweise durch eine Konus-Muffen-Verbindung (Steckmuffenverbindung), lässt sich eine Erdwärmesonde modular aus mehreren rohrförmigen Elementen aufbauen. Dies hat insbesondere im Hinblick auf Transport, Montage und Herstellungskosten deutliche Vorteile gegenüber bisherigen Lösungen. Die Erdwärmesonde kann aus mehreren rohrförmigen Elementen aus Metall (hier mit eingeschlossen sind natürlich auch Elemente aus Gusseisen) aufgebaut sein, wobei eine Länge von 50 m und mehr erreichbar ist. Die erfindungsgemäße Erdwärmesonde wird in das Erdreich eingebracht und nach dem Einbringen mit dem Leitungssystem, das beispielsweise ein Rohr oder ein Schlauch bzw. Rohre oder Schläuche bzw. Funktionseinheiten aus Rohren und/oder Schläuchen aufweisen kann, zur Führung und Durchleitung des flüssigen oder gasförmigen Wärmeträgermediums bestückt und anschließend zur wärmeleitenden Verbindung mit dem rohrförmigen Element mit einer Vergussund/oder Klebemasse ausgegossen, verfüllt bzw. verklebt.

Das Einschlagen/Einrammen der rohrförmigen Elemente verdrängt das umgebende Erdreich nur geringfügig, schafft durch die damit einhergehende Verdichtung des Erdreichs zur Außenfläche des rohrförmigen Elements einen hervorragenden wärmeleitenden Kontakt, andererseits fällt bei dieser Art der Einbringung keinerlei Material zur Abfuhr auf die Deponie an. Das Einrammen der rohrförmigen Elemente kann mit einem üblichen 20 t-Bagger erfolgen. Es kann somit in einer Vielzahl der Fälle dieselbe Baumaschine verwendet werden, mit welcher z.B. der Aushub durchgeführt oder andere Erdbewegungsarbeiten auf einer Baustelle ausgeführt werden.

Die einzelnen rohrförmigen Elemente der Erdwärmesonde werden in Standardlängen auf die Baustelle geliefert. Eine Standardlänge beträgt z.B. 5 m. In diesen Längen werden die rohrförmigen Elemente eingerammt. Die einzelnen Rohrschüsse werden vorzugsweise durch konische Steckmuffen ineinander gesteckt und durch das Einrammen kraftschlüssig, zug- und druckfest sowie dicht verbunden. Auf diese Weise werden die Erdwärmesonden bis zu 50 m und mehr lotrecht oder in einem bestimmten Winkel zur Lotrechten in das Erdreich/in den Boden eingebracht.

Anschließend an die Abteufung der rohrförmigen Elemente wird das Leitungssystem in das rohrförmige Element/die rohrförmigen Elemente eingebracht.

Durch Anwendung geeigneter Materialien für das Leitungssystem ermöglicht die vorliegende Erfindung auch die Führung und Durchleitung von flüssigen und gasförmigen Wärmeträgermedien. So kommen beispielsweise für gasförmige Wärmeträgermedien Metallrohre zur Anwendung, für flüssige Wärmeträgermedien beispielsweise Kunststoffe, Gummi etc.

In einer bevorzugten Weiterbildung besteht das Leitungssystem aus zumindest einer Zuleitung und zumindest einer Rückleitung, wobei die Rückleitung mit einer wärmeisolierenden Umhüllung versehen ist und die Zuleitung in gutem thermischen Kontakt zu dem rohrförmigen Element steht. Vorzugsweise ist das Leitungssystem in dem rohrförmigen Element mit einem gut wärmeleitenden Material vergossen.

Diese Maßnahmen haben den Vorteil, dass durch die wärmeisolierende Umhüllung der Rückleitung kein thermischer Kurzschluss zwischen dem einströmenden und dem ausströmenden Wärmeträgermedium auftritt. Darüber hinaus wird durch den guten thermischen Kontakt zu dem rohrförmigen Element dafür gesorgt, dass das die Zuleitung durchströmende Wärmeträgermedium möglichst viel Wärmeenergie aus dem umgebenden Erdreich/Boden aufnehmen kann. Das Einstecken des Leitungssystems in die rohrförmigen Elemente und das anschließende Vergießen mit einem gut wärmeleitenden Material hat sich als besonders vorteilhaftes Verfahren herausgestellt.

In einer bevorzugten Weiterbildung sind mehrere rohrförmige Elemente zu einer Einheit zusammengesteckt, wobei die Verbindung zweier Elemente über eine Steckmuffen-Verbindung erfolgt.

Diese Maßnahme hat den Vorteil, dass die Verbindung zweier rohrförmiger Elemente sehr einfach beim Einrammen derselben erfolgt, so dass zur Verbindung keine vorgelagerten Schritte erforderlich sind.

In einer bevorzugten Weiterbildung sind die rohrförmigen Elemente untereinander und ist die Rammspitze dicht mit dem rohrförmigen Element verbunden, so dass kein Wärmeträgermedium austreten kann. Weiter bevorzugt wird die Zuleitung von dem rohrförmigen Element gebildet, wobei an dem der Rammspitze gegenüberliegenden Ende des rohrförmigen. Elements ein Abschlussteil vorgesehen ist, das der Abdichtung des rohrförmigen Elements und der Druckaufnahme dient und jeweils eine Öffnung für die Rückleitung und eine mit dem rohrförmigen Element in Fluidkontakt stehende Einlassleitung aufweist.

D.h. mit anderen Worten, dass das über die Einlassleitung einströmende Wärmeträgermedium im rohrförmigen Element selbst zu der unteren Öffnung der Rückleitung und über diese nach oben zurück und dann nach außen strömt.

Dies führt zu einem sehr einfachen kostengünstigen Aufbau, wobei eine ausgezeichnete Wärmeübertragung vom Erdreich/Boden über die Wand des rohrförmigen Elements in das Wärmeträgermedium möglich wird.

In einer bevorzugten Weiterbildung ist die Zuleitung aus mehreren, vorzugsweise vier Leitungen aufgebaut, die beabstandet zueinander verlaufen und an dem der Rammspitze gegenüberliegenden Ende des rohrförmigen Elements zusammenlaufen.

Diese Maßnahme hat den Vorteil, dass durch Führung der Rohre nahe an der Innenwand des rohrförmigen Elements eine bessere Wärmeübertragung in das Wärmeträgermedium erzielt wird. Üblicherweise sind die mehreren Leitungen der Zuleitung gleichmäßig beabstandet zueinander angeordnet. Selbstverständlich ist es auch denkbar, eine ungleichmäßige Verteilung vorzunehmen.

In einer bevorzugten Weiterbildung weist die Rückleitung ein Dehngefäß auf, das vorzugsweise eine nach außen abgeschlossene Luftkammer aufweist, die ein Ausdehnen des Wärmeträgermediums aufgrund der Komprimierbarkeit der Luft zulässt.

In einer bevorzugten Weiterbildung erstreckt sich die Rückleitung über nahezu die gesamte Länge des rohrförmigen Elements. D.h. mit anderen Worten, dass die Rückleitung erst im Bereich der Rammspitze beginnt und dort das Wärmeträgermedium entweder aus dem Innenraum des rohrförmigen Elements oder aus der Zuleitung aufnimmt.

Ferner ist es möglich, die rohrförmigen Elemente (12) nicht nur als Erdwärmesonde sondern auch zu statischen Zwecken, also bspw. zur statischen Abstützung von Bauwerken, zu verwenden.

Zur Ausbildung eines Erdwärmesonden-Systems werden mehrere erfindungsgemäße Erdwärmesonden örtlich verteilt angeordnet und miteinander gekoppelt.

Ein solches Erdwärmesonden-System ermöglicht eine bessere Anpassung an die Bodenverhältnisse und behördlichen Vorgaben. Wird beispielsweise eine bestimmte Einrammlänge bzw. Einrammtiefe einer Erdwärmesonde nicht erreicht, lässt sich diese gewünschte Länge nun dadurch erreichen, dass an mehreren nahe beieinander liegenden Stellen weitere Erdwärmesonden eingerammt werden.

An dieser Stelle sei noch angemerkt, dass die rohrförmigen Elemente sowohl einen kreisförmigen, als auch ovalen oder eckigen Querschnitt besitzen können. Die Erfindung ist nicht auf im Querschnitt kreisförmige Elemente beschränkt.

Ferner sei angemerkt, dass die Funktion der Zuleitung und der Rückleitung vertauscht werden kann, es wäre nämlich auch denkbar, das Wärmeträgermedium durch die "Rückleitung" ein- und die "Zuleitung" ausströmen zu lassen.

Die Erdwärmesonde wurde bisher nur in Zusammenhang mit der Aufnahme von Energie, also der Erwärmung des Wärmeträgermediums, beschrieben. Es versteht sich jedoch, dass auch der umgekehrte Fall möglich ist, bei dem Energie in den Boden/Erdreich abgegeben wird, um das Wärmeträgermedium abzukühlen. Die Erfindung soll sich auf beide Funktionen erstrecken.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Vorteile und Ausgestaltungen der Erfindung ergeben sich aus der Beschreibung und der beiliegenden Zeichnung. Die Erfindung wird nun an Hand von verschiedenen Ausführungsbeispielen unter Bezugnahme auf die Zeichnung näher erläutert. Dabei zeigen:
- Fig. 1: eine schematische Schnittdarstellung einer nicht-erfindungsgemäßen Erdwärmesonde, die zur Erläuterung dient;
- Fig. 2: eine schematische Schnittdarstellung einer nicht erfindungsgemäßen Erdwärmesonde;
- Fig. 3a: eine schematische Schnittdarstellung einer nicht erfindungsgemäßen Erdwärmesonde;
- Fig. 3b: ein Detail der in Fig. 3a gezeigten Erdwärmesonde;
- Fig. 3c: eine schematische Schnittansicht entlang der Linie A-A in Fig. 3a;
- Fig. 3d: eine schematische Schnittdarstellung entlang der Linie B-B in Fig. 3a;
- Fig. 4a: eine schematische Schnittdarstellung einer Erdwärmesonde gemäß einer Ausführungsform;
- Fig. 4b: eine schematische Schnittdarstellung entlang der Linie E-E in Fig. 4a;
- Fig. 4c: eine schematische Schnittdarstellung entlang der Linie F-F in Fig. 4b;
- Fig. 4d: eine schematische Schnittdarstellung entlang der Linie G-G in Fig. 4b;
- Fig. 5a: eine schematische Schnittdarstellung einer nicht erfindungsgemäßen Erdwärmesonde; und
- Fig. 5b: eine schematische Schnittdarstellung entlang der Linie A-A in Fig. 5a.

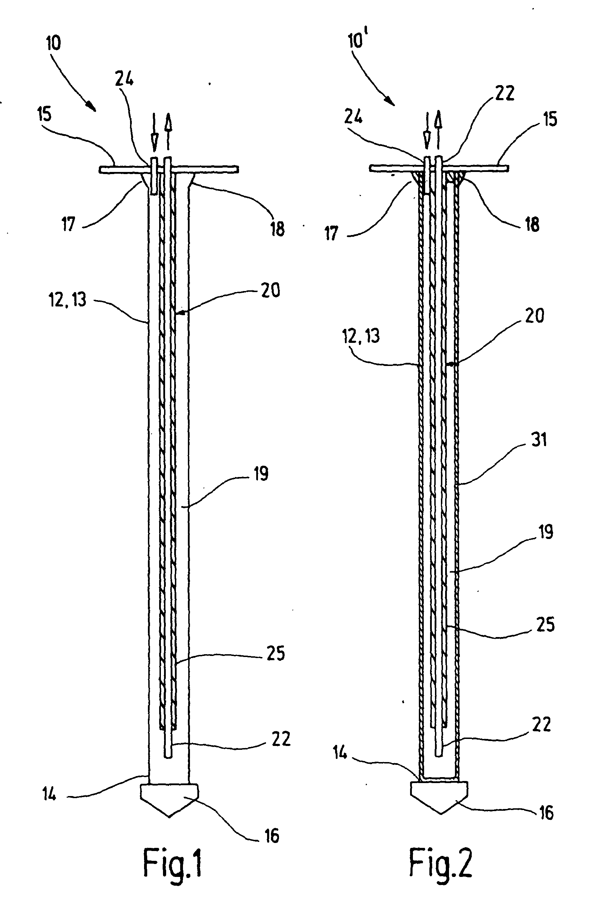

In Fig. 1 ist eine Erdwärmesonde schematisch dargestellt und mit dem Bezugszeichen 10 gekennzeichnet. Die Erdwärmesonde 10 umfasst ein rohrförmiges Element 12 mit beliebigem Querschnitt, wobei die vorliegende Ausführungsform einen kreisförmigen Querschnitt besitzt. Das rohrförmige Element 12 ist aus einem Metall gefertigt und wird nachfolgend als Metallrohr 13 bezeichnet.

Das Metallrohr 13 besitzt beispielsweise eine Wanddicke von ca. 7 mm und eine Länge von etwa 5 m. An dieser Stelle sei jedoch angemerkt, dass auch andere Dicken und Längen gewählt werden können.

Das Metallrohr 13 ist an seinem einen Längsende 14 mit einer Rammspitze 16 dicht verschlossen. Die Rammspitze 16 ist ebenfalls aus Metall gefertigt und so behandelt, dass sie dem Einrammen des Metallrohrs 13 in den Erdboden standhält.

Das Metallrohr 13 weist an seinem anderen Längsende 17 eine muffenförmige Erweiterung 18 auf, die dazu dient, das Metallrohr 13 mit einem anderen, gleich ausgebildeten Metallrohr durch Ineinanderstecken miteinander zu verbinden. Um eine solche Steckverbindung zu ermöglichen, ist das Längsende 14 mit einem leichten Konus - in der Figur nicht zu erkennen - versehen.

Das Metallrohr 13 umschließt einen Innenraum 19, der am Längsende 14 durch die Rammspitze 16 und am gegenüberliegenden Ende 17 durch ein Abschlusselement bzw. eine Abdeckplatte 15 abgedichtet ist.

Die Erdwärmesonde 10 umfasst ferner ein Leitungssystem 20, das dazu dient, ein Wärmeträgermedium (beispielsweise ein Wasser-Glykol-Gemisch) in den Innenraum 19 des Metallrohrs 13 hinein und aus diesem heraus zu führen. Insbesondere soll das Wärmeträgermedium in engen thermischen Kontakt mit der Wand des Metallrohrs 13 und über dieses mit dem umliegenden Erdreich gelangen.

Bei der in Fig. 1 gezeigten Erdwärmesonde 10 umfasst das Leitungssystem 20 eine Rückleitung 22, die sich vom oberen Längsende 17 bis nahe zu dem unteren Längsende 14 erstreckt. Die Rückleitung 22 mündet nahe dem Längsende 14 in den Innenraum 19 des Metallrohrs 13. Die Rückleitung 22 nimmt das über eine Einlassleitung 24 des Leitungssystems in den Innenraum einströmende Wärmeträgermedium auf und führt es nach außen ab. Die Einlassleitung 24 erstreckt sich hierbei nur über eine sehr kurze Strecke durch die Abdeckplatte 15 hindurch und endet im Bereich des Längsendes 17. Das Wärmeträgermedium strömt folglich über nahezu die gesamte Länge des Metallrohrs 13 im Innenraum 19 nach unten zur Öffnung der Rückleitung 22. Der Innenraum 19 des Metallrohrs 13 bildet somit die Zuleitung für das Wärmeträgermedium. Da sowohl die Rammspitze 16 als auch die Muffen und die Abdeckplatte 15 den Innenraum 19 dicht abschließen, kann das Wärmeträgermedium nicht in das umliegende Erdreich gelangen.

In Fig. 1 ist noch zu erkennen, dass die Rückleitung 22 von einer Umhüllung 25 über nahezu die gesamte Länge umgeben ist. Die Umhüllung 25 ist aus einem sehr gut wärmeisolierenden Material hergestellt und dient dazu, einen thermischen Kurzschluss zwischen dem durch die Rückleitung 22 strömenden und dem im Innenraum 19 des Metallrohrs 13 nach unten strömenden Wärmeträgermedium zu verhindern.

Die Rückleitung 22 ist bevorzugt als Rohr oder Schlauch aus Kunststoff, Gummi oder Metall hergestellt und besitzt eine lichte Weite von etwa 15-50 mm. Das Metallrohr 13 selbst besitzt etwa einen Durchmesser von 50-300 mm.

Bei der in Fig. 1 gezeigten Erdwärmesonde 10 werden rund 8 Liter an Wärmeträgermedium pro Laufmeter Erdwärmesonde benötigt.

Die Erdwärmesonde 10 wird in zwei Schritten verbaut: zunächst wird das Metallrohr 13 an der gewünschten Stelle in den Boden gerammt. Anschließend wird im nächsten Schritt das Leitungssystem 20 in den Innenraum 19 des Metallrohrs 13 eingeführt und mit dem plattenförmigen Element 15 abgeschlossen.

In Fig. 2 ist eine weitere Erdwärmesonde dargestellt und mit dem Bezugszeichen 10' gekennzeichnet. Aus Vereinfachungsgründen werden nachfolgend für die Bezeichnung bereits in vorhergehenden Figuren dargestellter Teile die gleichen Bezugszeichen verwendet, und es wird auf eine nochmalige Beschreibung verzichtet.

Die Erdwärmesonde 10' ist nahezu identisch zu der in Fig. 1 gezeigten Erdwärmesonde 10 aufgebaut. Der einzige Unterschied besteht darin, dass der Innenraum 19 mit einem Schlauch 31 ausgekleidet ist. Der Schlauch 31 erstreckt sich über die gesamte Länge des Metallrohrs 13 und dichtet den Innenraum 19 zusätzlich nach außen ab.

Der Schlauch 31 ist aus Gummi oder einem anderen dehnbaren Material, wie z.B. Elastomeren, hergestellt. Der Schlauch 31 ist robust, weist dazu die entsprechende Wandstärke auf und hat im ursprünglichen, drucklosen Zustand einen geringfügig kleineren Außendurchmesser als der Innendurchmesser des Metallrohrs 13. Dieser innere Schlauch 31 ist an beiden Enden dicht verschlossen, weist am oberen Ende je eine Rohrdurchführung für die Zu- und Rückleitung auf und hat die Länge des Metallrohrs 13.

Der Schlauch 31 wird vor Einführen in das Metallrohr 13 mit einer klebenden Masse an seiner Außenseite benetzt und dann in das Metallrohr 13 eingebracht. Anschließend wird der Schlauch 31 unter Druck ausgedehnt. Damit legt sich der Schlauch 31 an der Innenwand des Metallrohrs 13 vollflächig an und bleibt durch die Verklebung in dieser Position.

Bei dieser Erdwärmesonde werden rund 8 Liter Wärmeträgermedium pro Laufmeter Erdwärmesonde benötigt.

Durch diese "Doppelmantellösung" (Metallrohr und Schlauch) wird eine sehr gute Dichtigkeit zum umgebenden Erdreich erzielt. Darüber hinaus ist die Montagezeit kurz.

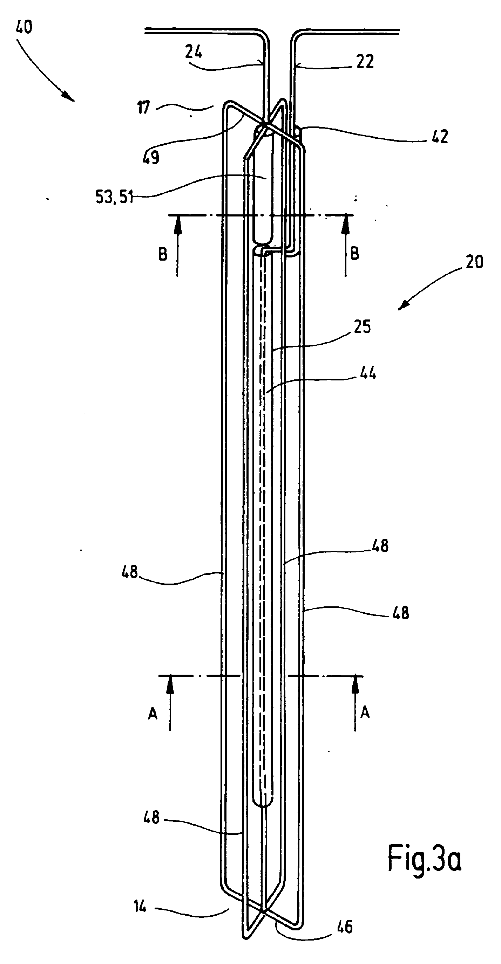

Mit Bezug auf die Fig. 3a bis 3d wird eine weitere Erdwärmesonde 40 beschrieben.

In Fig. 3a ist das Leitungssystem 20 der Erdwärmesonde 40 schematisch dargestellt. Aus Vereinfachungsgründen ist das das Leitungssystem 20 umgebende Metallrohr 13 mit der Rammspitze 16 nicht dargestellt. Es entspricht jedoch hinsichtlich seines Aufbaus dem bereits mit Bezug auf die Fig. 1 beschriebenen Metallrohr 13.

Das Leitungssystem 20 in Fig. 3a umfasst die Rückleitung 22 und die Einlassleitung 24. Die Rückleitung 22 umfasst einen ersten Längsabschnitt 42 und einen dazu versetzt verlaufenden zweiten Längsabschnitt 44. Der zweite Längsabschnitt 44 verläuft zentrisch zu dem Metallrohr 13, wohingegen sich der erste Längsabschnitt 42 aus der Mitte versetzt, aber dennoch parallel zu dem zweiten Längsabschnitt 44 erstreckt. Sowohl der erste Längsabschnitt 42 als auch der zweite Längsabschnitt 44 sind mit einer Umhüllung 25 wärmeisoliert.

Die Rückleitung 22 mündet im Bereich des Längsendes 14 in ein Sammelstück 46, über welches mehrere Zuleitungen bildende Kollektorrohre 48 versorgt werden. Die Kollektorrohre 48 verlaufen parallel zum zweiten Längsabschnitt 44 und sind konzentrisch dazu angeordnet. Die Kollektorrohre 48 erstrecken sich vom unteren Längsende 14 bis in den Bereich des oberen Längsendes 17. Dort münden die Kollektorrohre 48 in ein Verteilerstück 49, das eine Verbindung zu der Einlassleitung 24 herstellt.

Bei der vorliegenden Erdwärmesonde sind insgesamt vier Kollektorrohre 48 gleichmäßig beabstandet zueinander vorgesehen. Es versteht sich jedoch, dass diese Zahl sowohl verringert als auch erhöht werden kann. Es ist durchaus vorstellbar, dass nur drei oder sogar acht oder mehr Kollektorrohre 48 vorgesehen sind. Jedes der Kollektorrohre 48 verläuft jedoch in einem definierten Abstand zu der Innenwand des Metallrohrs 13. Ferner können die Kollektorrohre 48 eine runde, eine ellipsenförmige oder eine andere geeignete Querschnittsform aufweisen.

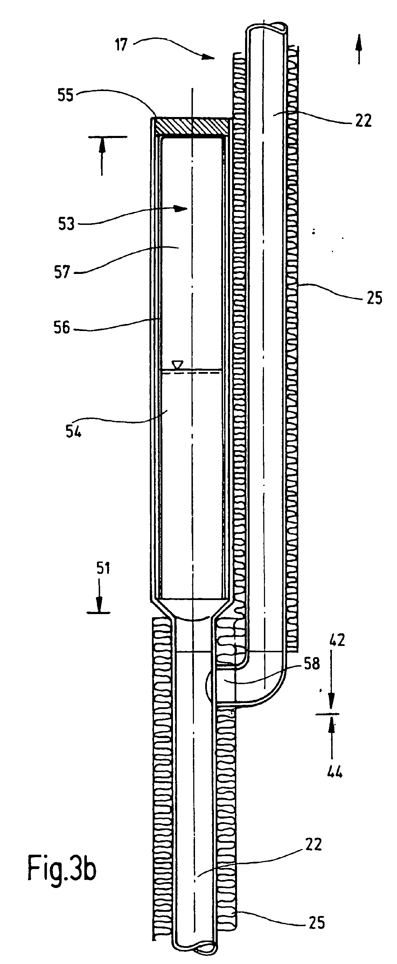

In Fig. 3a ist ferner zu erkennen, dass parallel zu dem Längsabschnitt 42 der Rückleitung 22 ein Rohrleitungsabschnitt 51 vorgesehen ist, der auf einer Linie mit dem zweiten Längsabschnitt 44 liegt. Dieser Rohrleitungsabschnitt 51 bildet ein Dehngefäß 53, das in Fig. 3b deutlicher zu erkennen ist. Das Dehngefäß 53 weist einen Außendurchmesser auf, der etwa dem Außendurchmesser der Umhüllung 25 entspricht. Das Dehngefäß 53 umfasst ein aufgeweitetes Rohr 54, das am oberen Ende 55 dicht und druckfest verschlossen ist. Im aufgeweiteten Teil des Rohrs 54 ist eine dünnwandige Metallhülse 56 vorgesehen, die ihrerseits am oberen Ende verschlossen ist. Die Metallhülse 56 weist einen Außendurchmesser auf, der geringfügig kleiner ist als der Innendurchmesser des aufgeweiteten Rohrs 54. Die Metallhülse 56 ist rundum eingeschlossen und damit in ihrer Lage fixiert. Die sich in der Metallhülse befindende Luft kann beim Füllvorgang nicht entweichen und bildet so ein Luftpolster 57 für die Volumenänderung des Wärmeträgermediums, das sich im Leitungssystem 20 befindet. Die Metallhülse 56 sorgt für absolute Luftdichtheit und damit für eine unbegrenzte Funktionsfähigkeit des Dehngefäßes 53.

In Fig. 3b ist noch zu erkennen, dass der erste Längsabschnitt 42 der Rückleitung 22 mittels Abzweiger 58 mit dem zweiten Längsabschnitt 44 der Rückleitung 22 verbunden ist.

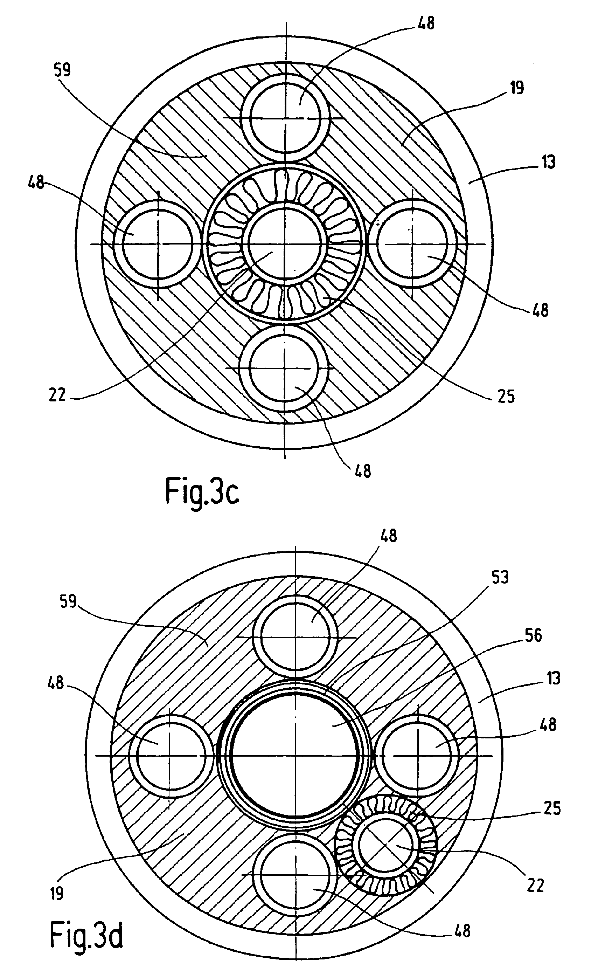

In den Fig. 3c und 3d ist die Erdwärmesonde 40 in zwei unterschiedlichen Schnittdarstellungen gezeigt. Fig. 3c entspricht dabei einer Schnittdarstellung entlang der Linie A-A aus Fig. 3a.

Deutlich zu erkennen ist das Metallrohr 13, das den Innenraum 19 umgibt. Im Innenraum 19 erstreckt sich zentrisch die Rückleitung 22, die von der isolierenden Umhüllung 25 umgeben ist. In 90° Winkelabständen sind die vier Kollektorrohre 48 nahe an der Innenwand des Metallrohrs 13 vorgesehen. Die Kollektorrohre 48 grenzen an der gegenüberliegenden Seite direkt an die Umhüllung 25 an.

In Fig. 3d ist die Erdwärmesonde 40 entlang der Linie B-B in Fig. 3a geschnitten dargestellt. Auch hier sind wiederum die vier Kollektorrohre 48 zu erkennen. Darüber hinaus ist in der Mitte das Dehngefäß 53 mit der innenliegenden Metallhülse. 56 gezeigt. Radial beabstandet zu der Metallhülse 56 erstreckt sich der obere, d.h. erste Längsabschnitt 42 der Rückleitung 22, die in Fig. 3d ebenfalls zu erkennen ist.

In beiden in Fig. 3c und 3d gezeigten Darstellungen ist der Innenraum 19 mit einer Ausguss- bzw. Vergussmasse 59 ausgegossen. D.h., dass die Zwischenräume zwischen dem Leitungssystem 20 und dem Metallrohr 13 durch diese leicht fließende, gut wärmeleitende Ausgussmasse 59 ausgefüllt werden, so dass ein guter Wärmeübergang vom Erdreich in die Kollektorrohre 48 gewährleistet ist. Die Ausguss- bzw. Vergussmasse 59 wird durch einen Schlauch eingebracht, der zwischen den Kollektorrohren 48 platziert wird, mit dem kompletten Innenteil bis in die Nähe des tiefsten Punktes eingeführt und im Zuge des Einbringens der Vergussmasse 59 wieder zurückgezogen. Damit wird sichergestellt, dass die Vergussmasse die Zwischenräume vollständig ausfüllt und keine Lufteinschlüsse entstehen können. Während des Verfüllens sind wegen des Auftriebs Maßnahmen gegen das Anheben des Innenteils, d.h. des innenliegenden Leitungssystems 20, vorzusehen.

Als Vergussmasse kommt beispielsweise ein spezielles Sandbetongemisch in Frage.

Die Vergussmasse selbst wird erst dann - wie beschrieben - eingefüllt, wenn das Metallrohr 13 in das Erdreich eingerammt und das Leitungssystem 20 eingeführt ist. Das Vergießen stellt sozusagen den letzten Schritt bei der Herstellung bzw. dem Einbau der Erdwärmesonde dar.

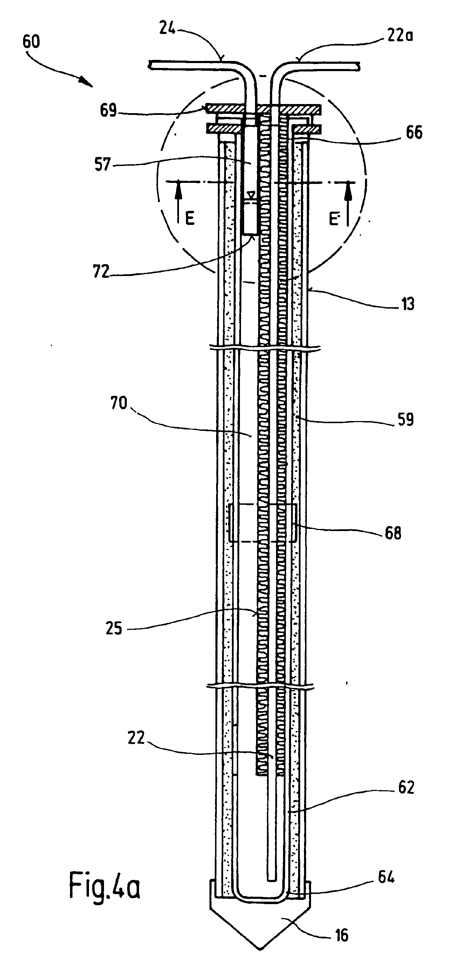

Mit Bezug auf die Fig. 4a bis 4d wird eine erfindungsgemäße Ausführungsform der Erdwärmesonde beschrieben.

Die in Fig. 4a gezeigte Erdwärmesonde ist mit dem Bezugszeichen 60 gekennzeichnet. Im Unterschied zu den vorhergehenden Ausführungsformen umfasst die Erdwärmesonde 60 mehrere ineinandergesteckte Rohre. Allgemein umfasst die Erdwärmesonde 60 einen Auskleidungsteil, mit welchem das Metallrohr 13 innen ausgekleidet wird, und einen Innenfunktionsteil, bestehend aus einem wärmegedämmten Rohr oder Schlauch zur Führung des Wärmeträgermediums, einer Dehneinrichtung und einem Flanschdeckel mit zwei Rohrdurchführungen. Die bezeichneten Teile aus Kunststoff (Kunststoff-Systemteile) sind weitgehend vormontiert und werden auf der Baustelle endmontiert. Das aus Kunststoff bestehende Auskleidungsrohr 62 wird in das bereits eingerammte Metallrohr 13 eingebracht und der vorhandene Zwischenraum mit einer geeigneten Vergussmasse verfüllt. Der Innenfunktionsteil des Leitungssystems 20 ist mit einer Dehneinrichtung ausgerüstet, die das zuvor beschriebene Dehngefäß ersetzt. Die Wärmedämmung eines Rohrabschnitts vermeidet den thermischen Kurzschluss von Zu- und Rücklauf. An der ausgerüsteten Erdwärmesonde 60 stehen oben zwei geeignete Kunststoff-Rohranschlüsse zur Verfügung.

Zurückkommend auf die Fig. 4a weist die Erdwärmesonde 60 ein Auskleidungsrohr 62 auf, das als Kunststoffrohr ausgebildet ist und einen Außendurchmesser aufweist, der etwas geringer ist als der Innendurchmesser des Metallrohrs 13. Am unteren Ende des Auskleidungsrohres 62 befindet sich ein dichter und druckfester Abschluss 64. Am oberen Ende ist das Auskleidungsrohr 62 für eine Flanschmontage 66 vorbereitet. Die einzelnen Rohrstangen 62 mit Längen von bis zu maximal 12 m werden Stück um Stück in das Metallrohr 13 eingesetzt und mittels Schweißung (z.B. Muffe) 68 dicht, druck- und zugfest verbunden. Die erforderliche bzw. gewünschte Gesamtlänge des Auskleidungsrohrs 62 wird durch das Aneinanderreihen von Rohren mit teils unterschiedlichen Längen erreicht. Als Auskleidungsrohr 62 kann auch ein gewellter Kunststoffschlauch mit der erforderlichen Gesamtlänge verwendet werden. Die Druckprobe wird vor dem Vergießen durchgeführt. Schließlich wird der Zwischenraum zwischen dem Metallrohr 13 und dem Auskleidungsrohr 62 mittels einer leicht fließenden und gut wärmeleitenden Ausgussmasse 59 vergossen. Wegen des Auftriebs sind während des Verfüllens mit Ausgussmasse 59 geeignete Maßnahmen gegen das Anheben des Auskleidungsrohrs 62 vorzusehen. Bis zum Einbau des Innenfunktionsteils, d.h. des Leitungssystems 20, wird das Auskleidungsrohr 62 mit einem Flanschdeckel durch Verschraubung fest verschlossen.

Das Innenfunktionsteil bzw. Leitungssystem 20 wird fertig montiert auf der Baustelle angeliefert. Es besteht im Wesentlichen aus der wärmegedämmten Rückleitung 22, der Dehneinrichtung und der Flanschplatte 69 mit zwei Durchführungen. Die wärmegedämmte Rückleitung 22 hat die Funktion, das Wärmeträgermedium vom unteren zum oberen Ende des Metallrohrs 13 oder in umgekehrter Richtung zu führen und dabei einen thermischen Kurzschluss zwischen Zu- und Rücklauf zu vermeiden. Die Wärmedämmung bzw. Umhüllung 25 vermindert darüber hinaus die Einfüllmenge des Wärmeträgermediums 70 pro laufendem Meter Erdwärmesonde. Die Rückleitung 22, welche der Führung und Durchleitung des Wärmeträgermediums dient, beginnt wenige Zentimeter oberhalb des unteren Abschlusses des Auskleidungsrohrs 62. Die Wärmedämmung muss dem vorkommenden Druck ohne wesentliche Volumenänderung standhalten und sitzt lose auf der Rückleitung 22, damit die Auftriebskräfte nicht auf das Rohr, sondern direkt auf den Flanschdeckel 69 übertragen werden.

Direkt unterhalb des Flanschdeckels 69 ist die Dehneinrichtung angeordnet, die aus zwei dünnwandigen, oben verschlossenen Rohrhülsen 72 besteht. Durch die spezielle Formgebung im oberen Bereich kann ein Teil des Wärmeträgermediums ungehindert aus dem Anschlussrohr aus- oder eintreten. Die beiden aus Metall bestehenden Rohrhülsen 72 sind in Bezug auf Querschnittsfläche und Länge so gestaltet, dass sie für eine Erdwärmesonde mit einer Länge von beispielsweise 35 m das notwendige Dehnvolumen aufweisen. Die sich in den Rohrhülsen 72 befindende Luft kann beim Füllvorgang nicht entweichen und bildet so das Luftpolster 57 für die Volumenänderung des Wärmeträgermediums. Die Rohrhülse sorgt für absolute Luftdichtheit und damit für eine unbegrenzte Funktionsfähigkeit der Dehneinrichtung 53.

Der Flanschdeckel bzw. die Flanschplatte 69 aus Kunststoff weist zwei dichte und druckfeste Rohrdurchführungen für die beiden Anschlussleitungen der Erdwärmesonde 60 auf. Eine Anschlussleitung 22a findet im Inneren ihre Fortsetzung durch die bereits beschriebene Rückleitung 22. Die zweite Anschlussleitung, die als Einlassleitung 24 dient, führt in den Innenraum des Auskleidungsrohrs 62; der innenliegende Rohrteil der zweiten Anschlussleitung weist die gleiche Länge wie die metallischen Rohrhülsen 72 auf. Anstelle des erfindungsgemäß vorgeschlagenen Flanschabschlusses kann auch eine andere konstruktive Lösung eines Abschlusses/Abschlussteils mit Dichtungen und/oder druckfesten Verschweißungen angewendet werden.

Bei dieser Ausführungsform werden rund 2,1 Liter Wärmeträgermedium pro Laufmeter Erdwärmesonde benötigt. Zum Ausgießen der Zwischenräume sind pro Laufmeter rund 4 Liter Vergussmasse erforderlich.

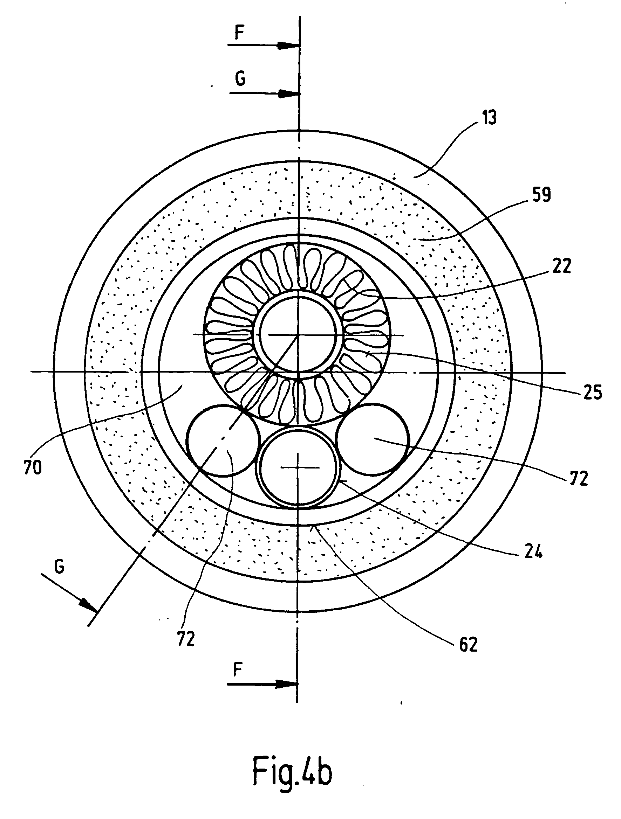

In Fig. 4b ist eine Schnittdarstellung entlang der Linie E-E aus Fig. 4a gezeigt. Zu erkennen ist das Metallrohr 13, das das Auskleidungsrohr 62 umgibt. Beide Rohre liegen konzentrisch zueinander. Der Raum zwischen Auskleidungsrohr 62 und Metallrohr 13 ist mit der Vergussmasse 59 ausgefüllt. Innerhalb des Auskleidungsrohrs 62 ist das Leitungssystem 20 vorgesehen.

Dieses besteht - wie bereits beschrieben - aus der Rückleitung 22, die etwas versetzt zur Mitte verläuft und von der Umhüllung 25 zur Wärmeisolierung umgeben ist.

Weiter sind in Fig. 4b die Einlassleitung 24 sowie die versetzt dazu angeordneten beiden Rohrhülsen 72 zu erkennen.

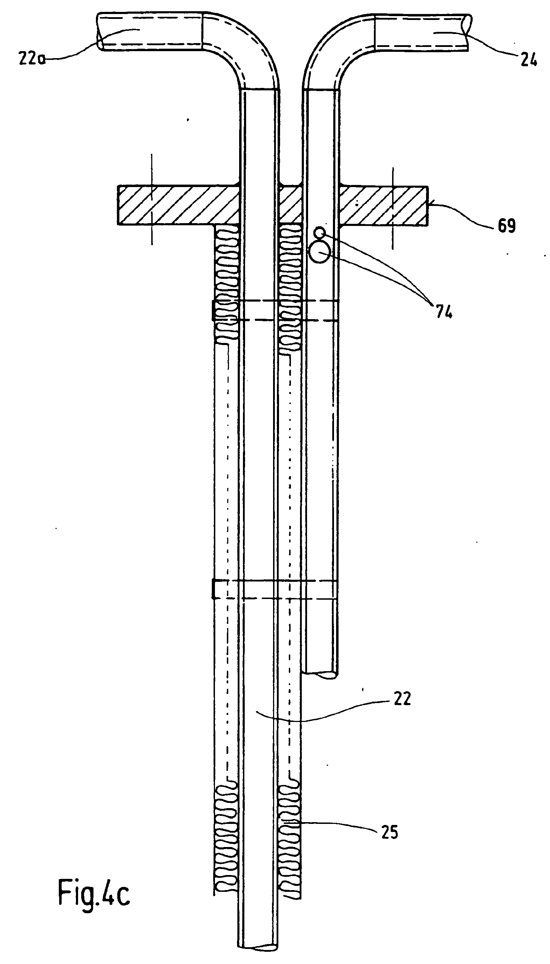

In Fig. 4c ist ein Ausschnitt der Erdwärmesonde 60 im Schnitt entlang der Linie F-F aus Fig. 4b dargestellt. Deutlich zu erkennen sind darin die Rückleitung 22a sowie die Rückleitung 22, die Umhüllung 25 sowie die Einlassleitung 24. In der Einlassleitung 24 sind Öffnungen 74 vorgesehen, damit das Wärmeträgermedium direkt unter der Flanschplatte 69 in den Innenraum des Auskleidungsrohres 62 austreten kann.

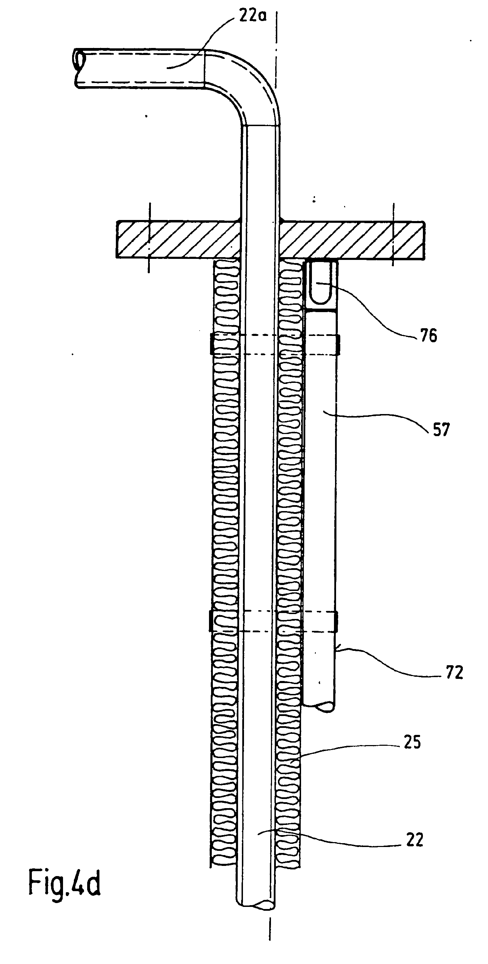

In der in Fig. 4d gezeigten Schnittdarstellung (entlang der Linie G-G aus Fig. 4b) ist eine Rohrhülse 72 mit einem Durchbruch 76 zu erkennen, wobei die Rohrhülse 72 unterhalb des Durchbruchs 76 einen dichten Abschluss aufweist. Der Durchbruch 76 dient zur Herstellung einer Verbindung vom Innenraum des Auskleidungsrohrs über die Öffnung 74 in die Einlassleitung 24. In der Rohrhülse 72 wird ebenfalls das bereits beschriebene Luftpolster 57 gebildet.

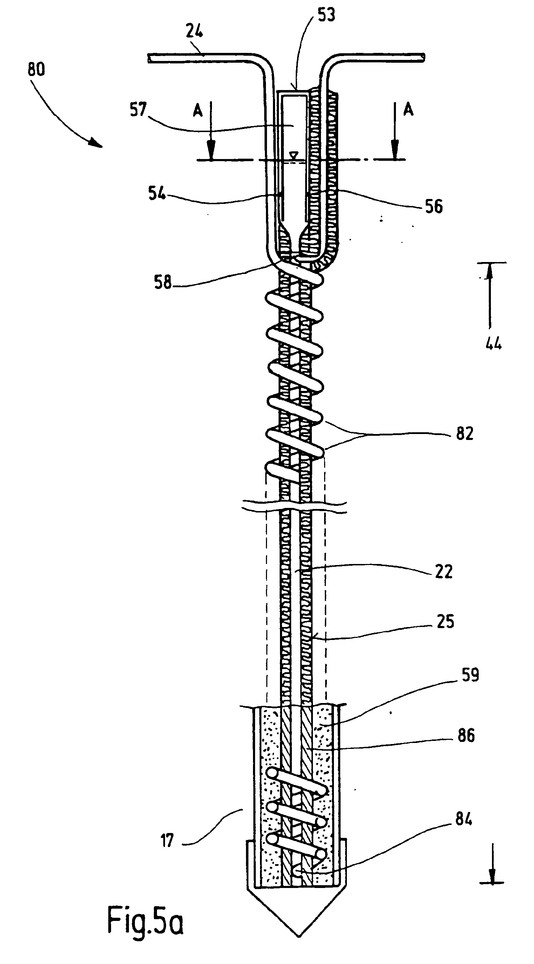

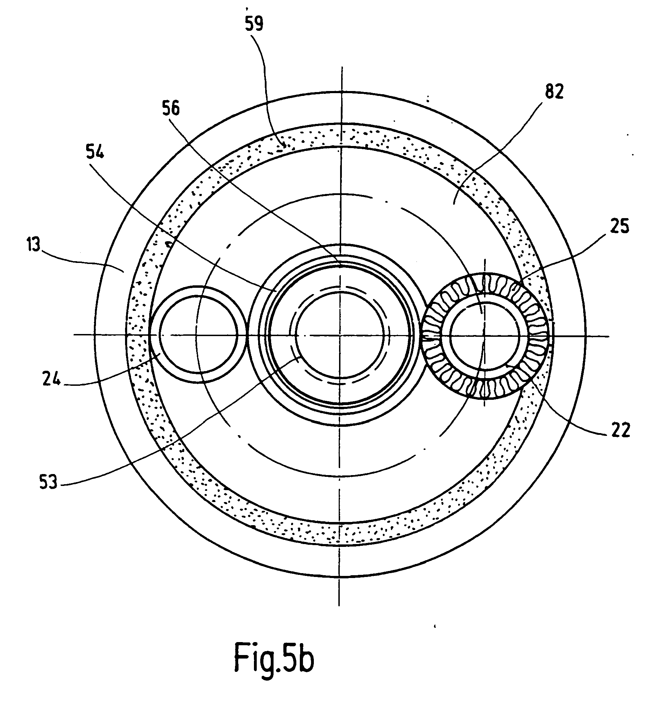

Mit Bezug auf die Fig. 5a und 5b wird eine weitere Erdwärmesonde beschrieben. In Fig. 5a ist die Erdwärmesonde schematisch im Längsschnitt dargestellt und mit dem Bezugszeichen 80 gekennzeichnet. Die Erdwärmesonde 80 entspricht im Wesentlichen der mit Bezug auf die Fig. 3a gezeigten und erläuterten Ausführungsvariante, so dass auf eine nochmalige Beschreibung der mit gleichen Bezugszeichen gekennzeichneten Teile verzichtet werden kann. Der einzige Unterschied der Erdwärmesonde 80 besteht darin, dass statt der vier Kollektorrohre 48 lediglich ein die Zuleitung bildendes Kollektorrohr 82 vorgesehen ist, das sich über nahezu die gesamte Länge des zweiten Längsabschnitts 44 der Rückleitung 22 wendelförmig um diese erstreckt. Das die gerade verlaufende Einlassleitung 24 durchströmende Wärmeträgermedium gelangt über das Kollektorrohr 82 und ein Verbindungsstück in die Rückleitung 22, wo es nach oben in Richtung Dehngefäß 53 und anschließend nach außen strömt.

Ein weiterer Unterschied ist darin zu sehen, dass im Bereich des unteren Längsendes 17 der Rückleitung 22 ein dickeres Rohr 86 verwendet wird, so dass etwa der gleiche Außendurchmesser wie bei der Umhüllung 25 erreicht wird. Dieser dickere und damit schwerere wärmeleitende Rohrabschnitt 86 dient dazu, durch sein Gewicht das wendelförmige Kollektorrohr 82 beim Einführen in das Metallrohr 13 nach unten zu ziehen und die Auftriebskräfte beim Einfüllen der Vergussmasse zumindest teilweise zu kompensieren.

Der Außendurchmesser der Umhüllung 25 sowie des Rohrabschnitts 86 wird so gewählt, dass die konzentrisch um die Rückleitung 22 angeordnete Kollektorrohr-Wendel zur Innenfläche des Metallrohrs 13 den gewünschten Abstand erhält.

Das Einbringen der Erdwärmesonde 80 in das Erdreich erfolgt entsprechend den bereits zuvor erläuterten Arbeitsschritten, nämlich zunächst dem Einrammen des Metallrohrs 13 in das Erdreich, anschließendem Einbringen des Leitungssystems 20 in den Innenraum 19 des Metallrohrs 13 und anschließendem Einfüllen der Vergussmasse 59.

In Fig. 5b ist die Erdwärmesonde 80 als Schnittdarstellung entlang der in Fig. 5a gezeichneten Linie A-A gezeigt. Zu erkennen sind die Rückleitung 22 und die Umhüllung 25 sowie das Dehngefäß 53, das aus einem aufgeweiteten Rohr 54 und der Metallhülse 56 besteht. Ferner ist die Einlassleitung 24 gezeigt und ein Bereich der Kollektorrohr-Wendel 82.

Alle zuvor beschriebenen Erdwärmesonden werden auf die gleiche Weise betrieben: Das Wärmeträgermedium wird über die Einlassleitung in das Metallrohr geführt und strömt hier nach unten in Richtung des unteren Endes der Rückleitung 22. Dabei nimmt das Wärmeträgermedium Energie aus dem Erdreich auf, was zu dessen Erwärmung führt. Anschließend strömt das Wärmeträgermedium über die isolierte Rückleitung zurück aus dem Metallrohr, wo dann die aufgenommene Energie dem Wärmeträgermedium zur Energiegewinnung entzogen werden kann.

Selbstverständlich kann die Erdwärmesonde auch in einer umgekehrten Weise betrieben werden, bei der Energie an das Erdreich abgegeben wird, um damit beispielsweise eine Kühlung vornehmen zu können.

Zusammenfassend ist festzustellen, dass die vorgenannten Ausführungsvarianten einen sehr einfachen Aufbau einer Erdwärmesonde ermöglichen, wobei die Länge des verwendeten Metallrohrs 13 durch Aufeinanderstecken einzelner in den gezeigten Figuren dargestellter Metallrohre 13 variierbar wird. Durch die Trennung der Funktionsteile, nämlich einerseits dem Metallrohr 13 und andererseits dem Leitungssystem 20, lässt sich eine kostengünstige Herstellung realisieren, da im großen Umfang standardisierte Elemente verwendet werden können. Darüber hinaus ist die Anlieferung zur Baustelle und die dortige Verbauung der Einzelteile einfach möglich. Die verwendeten Materialien lassen eine jahrzehntelange Nutzungsdauer erwarten.

Am Ende sei noch angemerkt, dass Merkmale der einzelnen beschriebenen Ausführungsformen auch miteinander beliebig kombinierbar sind.

## Patentansprüche

1. Erdwärmesonde zur Aufnahme und/oder Abgabe von thermischer Energie, vorzugsweise zur Gewinnung von geothermischer Energie, mit zumindest einem rohrförmigen Element (12), einer Rammspitze (16), die an einem Ende des rohrförmigen Elements (12) vorgesehen ist, und einem Leitungssystem (20), das in dem rohrförmigen Element (12) verläuft und zur Führung eines thermischen Energie aufnehmenden bzw. abgebenden Mediums (Wärmeträgermedium) dient, **dadurch gekennzeichnet, dass**
- das rohrförmige Element (12) aus Metall ist und dessen anderes Ende zur Aufnahme eines weiteren rohrförmigen Elements (12) ausgebildet ist, wobei das rohrförmige Element (12) in das Erdreich einrammbar ausgebildet ist,
- innerhalb des rohrförmigen Elements (12) ein gewelltes, vorzugsweise als Kunststoffschlauch ausgebildetes, Auskleidungsrohr (62) vorgesehen ist, welches durch ein gut wärmeleitendes Medium (59) in gutem thermischen Kontakt mit dem rohrförmigen Element (12) steht, und
- das Leitungssystem (20) im Auskleidungsrohr (62) verläuft.

2. Erdwärmesonde nach Anspruch 1, **dadurch gekennzeichnet, dass** das Leitungssystem (20) aus zumindest einer Zuleitung (24) und zumindest einer Rückleitung (22) besteht, wobei die Rückleitung (22) mit einer wärmeisolierenden Umhüllung versehen ist und die Zuleitung (24) in gutem thermischen Kontakt zu dem rohrförmigen Element (12) steht.

3. Erdwärmesonde nach Anspruch 1 oder 2, **dadurch gekennzeichnet, dass** das Auskleidungsrohr (62) mit dem Leitungssystem (20) in dem rohrförmigen Element (12) mit einem gut wärmeleitenden Material vergossen ist.

4. Erdwärmesonde nach einem der vorhergehenden Ansprüche, **dadurch gekennzeichnet, dass** mehrere rohrförmige Elemente (12) zu einer Einheit zusammengesteckt sind, wobei die Verbindung zweier Elemente über eine vorzugsweise dichte Steckmuffen-Verbindung (18) erfolgt.

5. Erdwärmesonde nach einem der vorhergehenden Ansprüche, **dadurch gekennzeichnet, dass** die Rammspitze (16) dicht mit dem rohrförmigen Element (12) verbunden ist.

6. Erdwärmesonde nach Anspruch 5, **dadurch gekennzeichnet, dass** die Zuleitung (24) vom Auskleidungsrohr (62) gebildet wird, welches am unteren Ende (64) dicht und druckfest verschlossen ist und wobei an dem der Rammspitze (16) gegenüberliegenden Ende des rohrförmigen Elements (12) ein Abschlussteil vorgesehen ist, das der Abdichtung des Auskleidungsrohrs (62) und der Druckaufnahme dient und das jeweils eine Öffnung für die Rückleitung (22) und eine mit dem Auskleidungsrohr (62) in Fluidkontakt stehende Einlassleitung (24) aufweist.

7. Erdwärmesonde nach einem der Ansprüche 2 bis 5, **dadurch gekennzeichnet, dass** die Zuleitung (24) aus mehreren, vorzugsweise vier Leitungen (48) aufgebaut ist, die beabstandet zueinander verlaufen und an dem der Rammspitze (16) gegenüberliegenden Ende des rohrförmigen Elements (12) zusammenlaufen.

8. Erdwärmesonde nach Anspruch 7, **dadurch gekennzeichnet, dass** das Leitungssystem (20) ein Dehngefäß (53) aufweist.

9. Erdwärmesonde nach Anspruch 8, **dadurch gekennzeichnet, dass** das Dehngefäß (53) eine nach außen abgeschlossene Luftkammer aufweist.

10. Erdwärmesonde nach einem der vorhergehenden Ansprüche, **dadurch gekennzeichnet, dass** sich die Rückleitung (22) über nahezu die gesamte Länge des rohrförmigen Elements (12) erstreckt.

11. Erdwärmesonde nach einem der Ansprüche 2 bis 10, **dadurch gekennzeichnet, dass** die Rückleitung (22) und die Zuleitung (24) aus einem Kunststoffmaterial gebildet sind.

12. Erdwärmesonde nach einem der vorhergehenden Ansprüche, **dadurch gekennzeichnet, dass** das rohrförmige Element (12) zusätzlich eine statische Funktion für ein Bauwerk übernehmen kann.

13. Erdwärmesonden-System zur Aufnahme und/oder Abgabe thermischer Energie, vorzugsweise zur Gewinnung von geothermischer Energie, **dadurch gekennzeichnet, dass** mehrere Erdwärmesonden nach einem der Ansprüche 1 bis 12 örtlich verteilt angeordnet und miteinander gekoppelt sind.

## Claims

1. Earth heat probe for absorbing and/or yielding thermal energy, preferably for obtaining geothermal energy, comprising at least one tubular element (12), a driving point (16), which is provided at one end of the tubular element (12), and a system of lines (20), which runs in the tubular element (12) and serves for carrying a medium absorbing and yielding thermal energy (heat transfer medium), **characterized in that**
- the tubular element (12) is made of metal and its other end is formed for receiving a further tubular element (12), the tubular element (12) being formed in such a way that it can be driven into the ground,
- a corrugated lining tube (62), which is preferably formed as a plastic tube, is provided inside the tubular element (12) and is in good thermal contact with the tubular element (12) by means of a medium (59) with good heat conduction, and
- the system of lines (20) runs in the lining tube (62).

2. Earth heat probe according to Claim 1, **characterized in that** the system of lines (20) comprises at least one feed line (24) and at least one return line (22), the return line (22) being provided with a heat-insulating sheathing and the feed line (24) being in good thermal contact with the tubular element (12).

3. Earth heat probe according to Claim 1 or 2, **characterized in that** the lining tube (62) is encapsulated with the system of lines (20) in the tubular element (12) by a material with good heat conduction.

4. Earth heat probe according to one of the preceding claims, **characterized in that** a number of tubular elements (12) are fitted together to form a unit, the connection between two elements being made by means of a preferably sealed sliding-socket joint (18).

5. Earth heat probe according to one of the preceding claims, **characterized in that** the driving point (16) is connected to the tubular element (12) in a sealed manner.

6. Earth heat probe according to Claim 5, **characterized in that** the feed line (24) is formed by the lining tube (62), which is closed at the lower end (64) in a sealed and pressure-resistant manner, and the end of the tubular element (12) opposite from the driving point (16) is provided with a terminating part, which serves for sealing the lining tube (62) and for absorbing pressure and has in each case an opening for the return line (22) and an inlet line (24) in fluid contact with the lining tube (62).

7. Earth heat probe according to one of Claims 2 to 5, **characterized in that** the feed line (24) is made up of a number of lines (48), preferably four lines, which run at a distance from one another and run together at the end of the tubular element (12) opposite from the driving point (16).

8. Earth heat probe according to Claim 7, **characterized in that** the system of lines (20) has an expansion vessel (53).

9. Earth heat probe according to Claim 8, **characterized in that** the expansion vessel (53) has an air chamber that is closed off from the outside.

10. Earth heat probe according to one of the preceding claims, **characterized in that** the return line (22) extends over virtually the entire length of the tubular element (12).

11. Earth heat probe according to one of Claims 2 to 10, **characterized in that** the return line (22) and the feed line (24) are formed from a plastics material.

12. Earth heat probe according to one of the preceding claims, **characterized in that** the tubular element (12) can additionally undertake a static function for a structure.

13. Earth heat probe system for absorbing and/or yielding thermal energy, preferably for obtaining geothermal energy, **characterized in that** a number of earth heat probes according to one of Claims 1 to 12 are arranged in a locally distributed manner and are coupled to one another.

## Revendications

1. Sonde géothermique pour absorber et/ou restituer de l'énergie thermique, de préférence pour récupérer de l'énergie géothermique, avec au moins un élément tubulaire (12) d'une pointe de sonnette (16) qui est prévu sur une extrémité de l'élément tubulaire (12) et avec un système de conduits (20) qui s'étend dans l'élément tubulaire (12) et qui est destiné à conduire un fluide absorbant ou restituant de l'énergie thermique (fluide caloporteur), **caractérisé en ce que**
- l'élément tubulaire (12) est en métal et **en ce que** son autre extrémité est conçue pour réceptionner un autre élément tubulaire (12), l'élément tubulaire (12) étant conçu pour être fiché en terre,
- on a prévu à l'intérieur de l'élément tubulaire (12) un tube d'habillage (62), de préférence conçu sous la forme d'un tuyau en matière synthétique, qui par l'intermédiaire d'un fluide bien thermoconducteur (59) est en bon contact thermique avec l'élément tubulaire (12), et
- le système de conduits (20) s'étend dans le tube d'habillage (62).

2. Sonde géothermique selon la revendication 1, **caractérisée en ce que** le système de conduits (20) est constitué d'au moins un conduit d'alimentation (24) et d'au moins un conduit de retour (22), le conduit de retour (22) étant muni d'une enveloppe thermo-isolante et le conduit d'alimentation (24) étant en bon contact thermique avec l'élément tubulaire (12).

3. Sonde géothermique selon la revendication 1 ou 2, **caractérisée en ce que** le tube d'habillage (62) est coulé avec le système de conduits (20) dans l'élément tubulaire (12), en une matière bien thermoconductrice.

4. Sonde géothermique selon l'une quelconque des revendications précédentes, **caractérisée en ce que** plusieurs éléments tubulaires (12) sont emboîtés en une unité, la liaison entre deux éléments étant assurée par un assemblage par manchon d'emboîtement (18) de préférence étanche.

5. Sonde géothermique selon l'une quelconque des revendications précédentes, **caractérisée en ce que** la pointe de sonnette (16) est reliée de façon étanche avec l'élément tubulaire (12).

6. Sonde géothermique selon la revendication 5, **caractérisée en ce que** le conduit d'alimentation (24) est formé par le tube d'habillage (62), qui sur l'extrémité inférieure (64) est fermé de façon étanche et résistant à la pression et une pièce de terminaison destinée à assurer l'étanchéité du tube d'habillage (62) et à absorber la pression et comportant respectivement une ouverture pour le conduit de retour (22) et un conduit d'admission (24) qui est en contact par fluide avec le tube d'habillage (62) étant prévue sur l'extrémité de l'élément tubulaire (12) qui est opposée à la pointe de sonnette (16).

7. Sonde géothermique selon l'une quelconque des revendications 2 à 5, **caractérisé en ce que** le conduit d'alimentation (24) est conçu en plusieurs, de préférence quatre conduits (48) qui s'étendent à distance les uns des autres et qui se rejoignent sur l'extrémité de l'élément tubulaire (12) qui est opposée à la pointe de sonnette (16).

8. Sonde géothermique selon la revendication 7, **caractérisée en ce que** le système de conduits (20) comporte un vase d'expansion (53).

9. Sonde géothermique selon la revendication 8, **caractérisé en ce que** le vase d'expansion (53) comporte une chambre à air fermée vers l'extérieur.

10. Sonde géothermique selon l'une quelconque des revendications précédentes, **caractérisée en ce que** le conduit de retour (22) s'étend sur pratiquement toute la longueur de l'élément tubulaire (12).

11. Sonde géothermique selon l'une quelconque des revendications 2 à 10, **caractérisée en ce que** le conduit de retour (22) et le conduit d'alimentation (24) sont en une matière synthétique.

12. Sonde géothermique selon l'une quelconque des revendications précédentes, **caractérisée en ce que** l'élément tubulaire (12) peut assurer en supplément une fonction statique pour un ouvrage de construction.

13. Système de sondes géothermiques pour absorber et/ou restituer de l'énergie thermique, de préférence pour récupérer de l'énergie géothermique, **caractérisée en ce que** plusieurs sondes géothermiques selon l'une quelconque des revendications 1 à 12 sont localement réparties et couplées entre elles.
